# EUROPEAN PATENT APPLICATION

(11) **EP 4 718 441 A1**
(43) Date of publication of application: **01.04.2026**
(21) Application number: 23218221.2
(22) Date of filing: 19.12.2023
(51) Int. Cl.: G10K 11/172, B64C 29/00, F02K 1/34, F02C 7/045, F02K 1/82

(54) **ACOUSTIC LINER FOR AN ENGINE OF A VERTICAL TAKE-OFF AND LANDING AIRCRAFT**

(71) Applicant: Lilium GmbH, 82234 Wessling (DE)
(72) Inventor: Vermeiren, Sebastien, 82234 Wessling (DE); Farooqui, Maaz, 82234 Wessling (DE); Leighton, Christopher, 82234 Wessling (DE)
(74) Representative: Ter Meer Steinmeister & Partner

(57) **Abstract**

The present invention relates to an acoustic liner (100) of a propulsion unit (500) of a vertical take-off and landing aircraft (600), which is operable between a hover position (HP) and a cruise position (CP). The acoustic liner (100) comprises a face-layer (110) with openings (111), a core-structure (120), which is coupled to an inner surface (113) of the face-layer (110) and comprises cells (121) with cell walls (122) surrounding cell cavities that are in fluid communication with the openings (111) to function as acoustic resonators. The acoustic liner (100) further comprises a base-layer (130) that covers the core-structure (120) on a side opposite to the face-layer (110). The core-structure (120) comprises also a plurality of drainage slots (140, 141, 142) that cut through the cell walls (122) of adjoining cells (121) for forming a network of interconnected fluid communication paths between the respectively slotted cells (121). The plurality of drainage slots (140, 141, 142) comprises a group of hover slots (141) and a group of cruise slots (142), which extend along slot directions (1410, 1420) that are different to each other. The acoustic liner (100) also comprises at least one drainage opening (131) that is in fluid communication with at least one of the slotted cells (121) for draining fluid entering the cell cavities via the openings (111) through the drainage slots (140, 141, 142). The present invention also relates to a propulsion unit (500) and an aircraft (600)

## Description

The present invention relates to an acoustic liner for a propulsion unit of a vertical take-off and landing aircraft. The invention also relates to a propulsion unit with the acoustic liner and to an aircraft with such propulsion unit. The invention further relates to a method for draining fluid from such propulsion unit.

The engines of an aircraft are one of the main sources of aircraft noise. Aircraft noise is generated, amongst others, by fans at the front of the engine and by compressor stages. Many aircraft engines are therefore equipped with noise-dampening panels on the inside of the nacelle to absorb some of the noise before it can leave the engine. Commonly, acoustic liners are used for this. The functionality of acoustic liners of dissipating acoustic energy is typically based on the Helmholtz resonance principle. This type of acoustic liners is often a panel with a sandwich structure, which comprises a perforated face-sheet as top-layer, a honeycomb structure as middle-layer, and a solid back-sheet as bottom-layer.

The use of acoustic liners poses various technical challenges. Fluid, such as water contained in the air or water originating from rain, can enter the cavities formed by the honeycomb structure and the bottom layer through the perforations in the face-sheet. Consequently, the noise-dampening functionality of a panel cannot be maintained when resonance volumes are filled. Also, water can form into ice when the aircraft travels through areas with sub-zero temperatures. The acoustic liners can be damaged as a consequence of volume expansion during ice formation. Thus, water accumulating inside the acoustic liners poses a risk for the safety of engines. Moreover, the accumulation of fluid leads to an increase in weight of the engine. This can lead to a shift of the centre of gravity of the aircraft. Also, more energy is needed for travelling due to the additional weight of the enclosed fluid. Small and battery powered aircrafts in particular are affected by these effects originating from fluid being collected inside the engines.

In the prior art this problem is typically addressed by incorporating drainage openings on partition walls between cavities to prevent water accumulating inside the acoustic liners. Each cell usually has two openings, which are aligned in one circumferential direction around the acoustic liner. At the very bottom of such acoustic liner, typically one longitudinal channel is used for leading the water from the cells away.

A disadvantage of this solution is that such water drainage mechanisms work only for acoustic liners that are intended to be used at a lower portion of the engine since the design uses gravity for drawing the liquid away. Furthermore, drainage can only work reliably in certain orientations and positions of the engine, such as can be found when the aircraft is at a substantially horizontal orientation, which may exist during a normal flight phase, for instance. While this may be insignificant for conventional aircrafts, it can be particularly problematic for small, battery powered and/or vertical take-off and landing aircrafts, where draining of entrapped liquid cannot be left until assuming normal flight mode.

A further disadvantage of the prior art solution is that the acoustic characteristics of the acoustic liner are changed due to the provision of openings. Resonance volumes, which were formerly separated from each other, are connected to each other by the openings. This leads to a shift in the resonance frequency and thus, changes noise dampening effects of the acoustic liner. For this reason, the provision of drainage openings is often perceived negative since the shift is difficult to predict and acoustic liners are designed and manufactured in a way to match a defined frequency for maximum noise attenuation.

Another disadvantage of this solution is that, due to the provision of through passages for expelling liquid, the pressure inside the nacelle reduces and, therefore, aerodynamic efficiency reduces. Also for this reason, the provision of drainage slots is perceived negative.

It is thus, an object of the invention to provide an acoustic liner, propulsion unit, aircraft and method for reliably removing trapped water from acoustic liners in all flight phases.

The above-described problem is solved -at least partially- by the acoustic liner of claim 1, the propulsion unit of claim 10, the aircraft of claim 14, and the method of claim 15.

Further advantages and features of the invention can be derived from the dependent claims, the description, and the figures. Features and details described in connection with the acoustic liner of the invention naturally also apply in connection with the propulsion unit of the invention, with the aircraft of the invention, and with the method of the invention, and vice versa, so that, regarding the disclosure of individual aspects of the invention, reference is and/or can be made always mutually.

A first aspect of the invention relates to an acoustic liner for a surface of a propulsion unit of a vertical take-off and landing aircraft. The propulsion unit is operable between a hover position and a cruise position. The acoustic liner comprises a face-layer, which comprises openings for receiving acoustic sound waves. The openings extend from an outer surface to an inner surface of the face-layer. Further, the acoustic liner comprises a core-structure, which is coupled to the inner surface of the face-layer. The core-structure comprises cells with cell walls, which surround cell cavities. The cell cavities are in fluid communication with the openings and define acoustic resonators. Also, the acoustic liner comprises a base-layer covering the core-structure on a side opposite to the face-layer. The core-structure comprises a plurality of drainage slots. The drainage slots cut through the cell walls of adjoining cells for forming a network of interconnected fluid communication paths between the respectively slotted cells. The plurality of drainage slots comprises at least a group of hover slots and a group of cruise slots. Each of the group of hover slots comprises a hover slot extension extending in a hover slot direction. Each of the group of cruise slots comprises a cruise slot extension extending in a cruise slot direction. The hover slot direction is different to the cruise slot direction. The base-layer and/or the face-layer comprises at least one drainage opening that is in fluid communication with at least one of the slotted cells to drain fluid that enters the cell cavities via the openings, through the drainage slots.

In other words, an acoustic liner for a vertical take-off and landing aircraft is provided. An acoustic liner may be understood as a structure for dampening or reducing acoustic noise. The noise may preferably originate from an aircraft engine or, more specifically, from a fan of an aircraft engine. The noise dampening effect may be based on Helmholtz resonance.

The acoustic liner is suitable for being disposed on a surface of a propulsion unit of said aircraft. Thus, the acoustic liner may have a configuration for facilitating fixation or attachment to said surface. The surface may be an exterior or interior surface of the propulsion unit, preferably covering at least a portion of the propulsion unit. The propulsion unit is operable between a hover position and a cruise position. For this, the propulsion unit may be relatively moveable, for instance pivot, with respect to other parts (e.g. wings) of the aircraft between at least two positions. A hover position may be understood as a position of the propulsion unit facilitating a flight direction of the aircraft that is substantially vertical (e.g. a direction aligned with gravity). A cruise position may be understood as a position of the propulsion unit facilitating a flight direction of the aircraft that is substantially horizontal (e.g. a direction transverse to gravity). Naturally, there may be more than one of said positions, respectively, as different positions may be suitable for hovering or cruising.

The acoustic liner comprises a face-layer with openings. For example, the face-layer may be porous, perforated and/or a mesh. For instance, the face-layer may comprise a porosity of 10% to 14%, preferably of 12%. The face-layer may form, for example, the outer surface of the acoustic liner. When attached to the inside of the propulsion unit, the face-layer may form at least part of the inner surface of an engine duct, so that the face-layer may be overflown with air sucked in by the propulsion unit. Preferably, the openings may be configured so that sound can pass through them freely and without obstructions. For example, the openings may be through-holes. Preferably, the face-layer may extend between the inner surface and the outer surface with a thickness in a range of 0,5 mm to 2 mm, or of 1 mm. Preferably, the face-layer may be made of a carbon fibre-reinforced plastic.

The acoustic liner further comprises a core-structure with cells with cell cavities. Preferably, the core-structure may comprise a cell density in the range of 20 kg/m³ to 75 kg/m³. The core-structure may be a honeycomb structure. The core-structure may be configured for providing mechanical stiffness to the acoustic liner. For instance, the core-structure may be made of a metallic material, such as Aluminium, or a non-metallic material, such as Nomex, Kevlar, fibreglass or a thermoplastic polymer, such as Polypropylene or Polycarbonate. The core-structure is coupled to the inner surface of the face-layer such that the openings are in fluid communication with the cell cavities. For instance, the core-structure may be fixed or attached to the inner surface by material closure, such as by applying adhesive films, gluing or welding. The acoustic liner also comprises a base-layer covering the core-structure on a side opposite to the face-layer. Thus, the core-structure is sandwiched between the face-layer and the base-layer. The base-layer may preferably be made of a carbon fibre-reinforced plastic or thermoplastic polymer, such as Polypropylene or Polycarbonate. The cell cavities are in fluid communication with the openings and define acoustic resonators. Fluid communication may be understood as being fluidically connected, for example via a fluid channel. A fluid communication may allow a volume of fluid to pass between different locations. An acoustic resonator may be understood as a Helmholtz resonator. As such, an acoustic resonator may be formed by an at least partially enclosed volume of air that comprises an opening for communicating with air outside the enclosure of said volume.

The core-structure further comprises a plurality of drainage slots that cut through the cell walls of adjoining cells. Therein, a slot may be understood as a long, narrow open passage. The expression of "cutting through" may be understood as extending through or penetrating the cell walls, so that the cell walls comprising apertures or openings arranged to form a passage that extends along an extension direction.

A network of interconnected fluid communication paths between the respectively slotted cells can be formed by the drainage slots. A fluid communication path may be understood as a flow path for liquid formed by one or more of the fluidically connected drainage slots.

The plurality of drainage slots comprises at least a group of hover slots and a group of cruise slots. Each of the group of hover slots has a hover slot extension that extends in a hover slot direction, and each of the group of cruise slots has a cruise slot extension that extends in a cruise slot direction. The hover slot direction is different from the cruise slot direction. Therein, a group of slots may be understood as a set of the drainage slots, which, for example, may have their extension direction in common.

The base-layer comprises at least one drainage opening that is in fluid communication with at least one of the slotted cells for draining entrapped fluid through the drainage slots.

With this configuration, an acoustic liner can be provided that allows directing and draining liquid, such as water from air or rain, from the cell cavities in more than one flight position. This is because, unlike in solutions of the prior art, the acoustic liner comprises at least two sets of distinguished drainage slots that extend in different directions. Each extension direction can be used to direct water away from the cell cavities in a corresponding flight position. Thereby, the acoustic liner can avoid the problem of having to wait for the propulsion unit to take one particular position, and instead, the water can be ejected before it can accumulate. Accordingly, it can be ensured that the weight of the acoustic liner does not increase due to a buildup of water. Further, it can be ensured that the noise-dampening functionality of the acoustic liner remains intact even during adverse weather conditions, such as heavy rainfall or high humidity.

According to a preferred embodiment, the hover slot direction may be at an angle to the cruise slot direction. Preferably, the angle may be at least 20°, 30°, 40°, 50°, 60°, 70°, 80° or 90°. Alternatively or additionally, the hover slot direction may be perpendicular or at least substantially perpendicular to the cruise slot direction.

Thereby, sufficiently different groups of fluid communication paths can be defined that allow to be aligned with predominant positions of the aircraft during a typical motion trajectory of the aircraft. Thereby, transport of water in different flight positions can be ensured so that noise-dampening effects of the acoustic liner can be retained and weight increases can be avoided.

According to a further preferred embodiment, the cell walls of at least one of the cells may be cut by at least one of the hover slots and at least one of the cruise slots.

Thereby, water accumulated in the cells can be guided out of the acoustic liner directly via at least one of the drainage slots so that drainage fluid paths can be shortened.

According to a preferred embodiment, the drainage slots may be provided as a plurality of apertures in the cell walls. The apertures may be aligned with each other. Preferably, the apertures may be aligned along a respective slot centreline to define the respective drainage slot. More preferred, the drainage slots of the same group may extend parallel or substantially parallel with each other along their respective slot centrelines. Preferably, the apertures may comprise a polygonal, semi-circular or circular cross-sectional profile. Alternatively or additionally, the apertures may comprise a rectangular or square cross-sectional profile. Alternatively or additionally, each of the apertures may have a height in the range of 1 mm to 8 mm. Preferably, the height may be 2 mm. Alternatively or additionally, each of the apertures may have a width in the range of 1 mm to 8 mm. Preferably, the width may be 2 mm.

Thereby, the shape of the apertures can be tailored to match the acoustic requirements of the acoustic liner. In particular, the impact of connecting the otherwise volumes of air enclosed inside the cell cavities can be controlled by defining a corresponding shape for the drainage slots. This is, because the size of a drainage slot or the area of the aperture in relation to the entire area of the cell wall change not only the noise dissipation spectrum, but also aerodynamic efficiency.

According to a further preferred embodiment, the cells may be arranged in the core-structure in a honeycomb pattern. Preferably, the honeycomb pattern may extend with a ribbon direction and an expansion direction, which may be transverse to the ribbon direction. Preferably, the cruise slot direction may be parallel to the ribbon direction. More preferred, the hover slot direction may be parallel to the expansion direction. Preferably, the core-structure may be arranged such that the ribbon direction extends in a circumferential or lengthwise direction of the acoustic liner and the expansion direction extends in an axial or widthwise direction of the acoustic liner.

By aligning extensions directions of the drainage slots with directions defining the cell pattern, the number of drainage slots required to form a well-connected network of fluid communication paths can be reduced and thereby, the impact of the drainage slots on noise-dampening and aerodynamic efficiency can be reduced.

According to a preferred embodiment, the cruise slots may be provided at predetermined and/or regular intervals in the hover slot direction and/or preferably in the expansion direction of the honeycomb pattern, if provided. Preferably, the intervals may be configured such that each cell is traversed by only one of the cruise slots.

Thereby, the impact of the drainage slots on noise-dampening and aerodynamic efficiency can be further reduced.

According to a further preferred embodiment, at least one, some or all of the drainage slots may extend at the cell walls from a circumferential edge of the respective cell walls towards the opposite side thereof. Preferably, at least some of the drainage slots, preferably the apertures, may be provided at a section of the core-structure adjacent to the base-layer.

Thereby, manufacturing of the acoustic liner can be improved since the slots can be cut or sawed into the core-structure at one of its ends. Moreover, the drainage slots can be provided at a bottom portion of the acoustic liner to avoid water accumulating inside the cell cavities. Thereby, weight increases of the acoustic liner can be avoided and the noise-dampening functionality of the acoustic liner can be ensured.

According to a preferred embodiment, at least some or all of the drainage slots, preferably the apertures, may be provided at a section of the core-structure adjacent to the face-layer. More preferably, the hover slots may be provided at a section of the core-structure adjacent to the face-layer and the cruise slots may be provided at a section of the core-structure adjacent to the face-layer or the base-layer.

Thereby, an acoustic liner can be provided that is particularly suitable to be used in an upper portion of a propulsion unit, for example as a top liner. This is because water entering the cell cavities at the top of the propulsion unit is drawn back towards the face-layer under the influence of gravity. However, without drainage slots near the face-layer, it is difficult for the water to leave the cell cavities. Thus, unlike the prior art, the present configuration also facilitates the provision of acoustic liners as top liners of a propulsion unit.

According to a preferred embodiment, the at least one drainage opening may be provided at a section middle section of the base-layer. Alternatively or additionally, the at least one drainage opening may be provided at a section of the base-layer proximate to a circumferential edge of the base-layer.

These configurations allow the water leaving the acoustic liner at locations that may be situated lowest in a respective flight position. For instance, during cruising, the lowest point of the acoustic liner may be along a middle portion of the acoustic liner, while during hovering, the lowest point of the acoustic liner may be at a side portion of the acoustic liner.

The at least one drainage opening may be provided as a through-hole or a slot in the base-layer. Alternatively or additionally, the at least one drainage opening may have a cross-sectional profile that is identical or substantially identical the cross-sectional profile of one of the cell cavities. Alternatively or additionally, the at least one drainage opening may have a circular, square or rectangular cross-sectional profile. Alternatively or additionally, the at least one drainage opening may have a length in the range of 1 mm to 10 mm, preferably 3 mm, and a width in the range of 1 mm to 10 mm, preferably 2 mm.

Thereby, the impact of the drainage opening on the noise-dampening functionality and the aerodynamic efficiency can be reduced.

Preferably, the openings of the face-layer may be slots or through holes preferably comprising a circular shape. More preferred, the openings may comprise a diameter in a range of 0,5 mm to 2 mm, or of 1 mm. The openings may be arranged with a variable distance or equidistant to each other, and/or in a pattern. Each of the cells may be in direct fluid communication with one or more of the openings.

Preferably, each of the cells may comprise a triangular cross-sectional profile, a quadrilateral cross-sectional profile, a hexagonal cross-sectional profile, an overexpanded cross-sectional profile, an octagonal cross-sectional profile, or a circular cross-sectional profile. Therein, each of the cells may comprise a cross-sectional profile with a diameter in a range of 3 mm to 10 mm, 5 mm to 8 mm, or of about 6,5 mm. Furthermore, the cells may have a cell depth defined by their respective cell walls. The cell depth may be in a range between 1 mm to 40 mm, 5 mm to 15 mm, or 8 mm to 12 mm, or is about 10 mm. Moreover, each of the cell cavities may be open on opposite sides with respect to the cell walls.

By modifying the geometry, density and arrangement of the cells and/or openings, the resonance frequency of the acoustic liner may be adapted. For instance, to shift the resonance frequency towards lower frequencies, the spacing between the opening may be increased. Alternatively, the size of the openings may be changed.

Preferably, the acoustic liner may be made of flame-resistant materials, and/or may be made of a material comprising aramid. Alternatively or additionally, the acoustic liner may be provided as a curved panel or liner for an engine nacelle. In particular, the panel may be curved about a panel axis. Preferably, the panel axis may be parallel to the expansion direction. Preferably, the panel axis may be on the same side as the face-layer with respect to the core-structure. Preferably, the acoustic liner may be ring-shaped. One of the groups of drainage slots, preferably the group of hover slots, may extend with their respective slot extension in a slot direction parallel to the panel axis, and wherein the respective other of the groups of drainage slots, preferably the cruise slots, may extend with their respective slot extension in a slot direction of the circumference of the acoustic liner: In a state of the acoustic liner being connected to the interior surface of a propulsion unit, the panel axis may be arranged to be parallel to an axis of an engine provided inside the propulsion unit.

Thereby, the acoustic liner is particularly suitable for being used in aircraft engines.

A further aspect of the present invention relates to a propulsion unit of a vertical take-off and landing aircraft. The propulsion unit is operable between a hover position and a cruise position. The propulsion unit comprises a propulsion unit housing, which comprises an engine having an engine axis. The propulsion unit housing further comprises an engine duct, which extends with an interior surface inside the engine duct between an intake opening and an exit opening. The propulsion unit also comprises a mounting interface for mounting the propulsion unit on a wing of the aircraft so that the propulsion unit is moveable relatively to the wing between at least one hover position and at least one cruise position. The propulsion unit further comprises at least one of the above-described acoustic liner. The acoustic liner is connected to the interior surface. The propulsion unit further comprises at least one wastewater outlet for removing fluid, which enters the engine duct via the intake opening, from the acoustic liner. The at least one wastewater outlet is in fluid communication with the at least one drainage opening of the acoustic liner.

Thereby, the same advantages and technical benefits can be derived as described above for the acoustic liner of the invention. In particular, the acoustic liner can be placed around the intake opening and in other areas of the engine where noise levels typically are high, such as in proximity to turbines and compressor stages. Thereby, the noise can be dampened effectively while overcoming problems with water accumulating inside the liner.

Preferably, the propulsion unit housing may be an engine nacelle. Moreover, the propulsion unit housing may comprise a variable area nozzle, which may be in the aft of engine. The variable area nozzle may be provided at the exit opening. The engine may be an electrical fan engine. The engine axis may determine a direction of flight of the aircraft.

Preferably, the acoustic liner may be arranged on the interior surface such that at least one of the groups of drainage slots, preferably the group of hover slots, may extend with their respective slot extension in a slot direction parallel to the engine axis. More preferably, the acoustic liner may be arranged on the interior surface such that the respective other of the groups of drainage slots, preferably the cruise slots, may extend with their respective slot extension in a slot direction obliquely to the engine axis.

Thereby, the drainage slots of at least one group of slots extend in parallel with the engine axis and the other transversely thereto so that irrespective of the position of the propulsion unit, always a pathway can be provided for transporting fluid out of the acoustic liner.

According to a preferred embodiment, the propulsion unit may comprise a plurality of acoustic liners for covering at least part of the interior surface. Preferably, the acoustic liners may extend at least partially with a contour of the interior surface. Alternatively or additionally, the acoustic liners may have a half-ring shaped or ring shaped cross-sectional profile when seen along the engine axis.

Preferably, the plurality of the acoustic liners may be provided at different sections of the interior surface along the engine axis. Additionally or alternatively, the acoustic liners may be provided at opposite sides of the interior surface with respect to the engine axis. For instance, the propulsion unit may comprise a fan at the front of the propulsion unit. A first set of two acoustic liners may be provided downstream of the fan at an upper and lower portion of the propulsion unit housing, respectively. Further, the propulsion unit may comprise a stator section downstream of the fan. A second set of two acoustic liners may be provided downstream of the stator section at an upper and lower portion of the propulsion unit housing, respectively. Further, the propulsion unit may comprise a variable are nozzle downstream of the fan and/or the stator. A third set of two acoustic liners may be provided at the stator section or downstream thereof. The two acoustic liners may be provided at an upper and lower portion of the propulsion unit housing, respectively.

Thereby, the noise can be dampened in immediate proximity of the source of its origin. Accordingly, noise can be reduced significantly with the above configuration even during or after adverse flight conditions, such as heavy rain. This illustrates how the invention enables the use of several acoustic liners without compromising flight safety and efficiency, and without increasing noise levels during the flight.

Preferably, the at least one wastewater outlet may be connected to each of the respective drainage openings of the acoustic liners. The wastewater outlets may preferably be connected to the drainage opening of the acoustic liner via a pipe or hose. Each of the wastewater outlets may preferably have a diameter in the range of 5 mm to 15 mm or may have a diameter of 10 mm.

According to a further preferred embodiment, the propulsion unit may comprise at least two of the wastewater outlets. The wastewater outlets may comprise a hover outlet for draining fluid in the hover position. The hover outlet may be provided at a first outlet section of the interior surface. Preferably, the first outlet section may be arranged proximate to the exit opening. The hover outlet may extend between the interior surface of the engine duct and an exterior surface of the propulsion unit housing along a hover outlet extension direction obliquely to the engine axis to fluidly connect the propulsion unit interior with the propulsion unit exterior. The hover outlet extension direction may extend perpendicularly to the cruise outlet extension direction.

Thereby, water entrapped inside the cell cavities can be ejected from the propulsion unit in a hover position. Therein, it is particularly advantageous that the hover outlet may be provided at a portion of the propulsion unit that is situated low along the engine axis during hovering so that water can be simply expelled by gravity.

According to a preferred embodiment, the wastewater outlets may comprise a cruise outlet for draining fluid in the cruise position. Therein, the cruise outlet may be provided at a second outlet section of the interior surface. Preferably, the second outlet section may be proximate to the intake opening and/or laterally offset from the engine axis. The cruise outlet may extend between the interior surface of the engine duct and an exterior surface of the propulsion unit housing along a cruise outlet extension direction that is obliquely to the engine axis to fluidly connect the propulsion unit interior with the propulsion unit exterior. More preferred, the hover outlet extension direction may extend perpendicularly to the cruise outlet extension direction.

Thereby, water entrapped inside the cell cavities can be ejected from the propulsion unit in a cruise position. Therein, it is particularly advantageous that the cruise outlet may be provided at a portion of the propulsion unit that is situated low along the engine axis during cruising so that water can be simply expelled by gravity.

According to a preferred embodiment, the propulsion unit housing may comprise at least two engine ducts. Preferably, each of the engine ducts may comprise an engine and at least one acoustic liner. More preferred, the engine ducts may extend in parallel next to each other and may be connected to each other via a connection section. Preferably, the wastewater outlets for each of the engine ducts may be arranged on opposite sides of the propulsion unit housing with respect to the connection section.

A further aspect of the present invention relates to an aircraft for vertical take-off and landing. The aircraft comprises at least two wings. Preferably, the aircraft may comprise two front nose wings and two back tail wings. Preferably, the nose wings may be canards. Each of the wings comprises a wing section to generate a lifting force during a cruising movement of the aircraft. Furthermore, each of the wings comprises at least one counter-mounting interface, onto which at least one of the above-described propulsion unit is mounted via its mounting interface.

Thereby, the same advantages and technical benefits can be derived as described above for the acoustic liner and for the propulsion unit of the invention.

A further aspect of the present invention relates to a method of draining fluid from an above-described propulsion unit, which is mounted to be moveable relative to a wing of the aircraft. Alternatively, the method relates to a method of draining fluid from a propulsion unit of the above-described aircraft. The method comprises a step of moving the propulsion unit to a cruise position. Alternatively or additionally, it comprises a step of moving the propulsion unit to a hover position.

Thereby, it is possible to remove trapped water from the propulsion units by adjusting the position of the propulsion unit. For instance, before take-off, the propulsion unit may be drained off the entrapped water by moving the propulsion units first to a cruise position and then a hover position. After holding the position for a predetermined amount of time, the position may be changed. This facilitates easy removal of trapped water and consequently, ensuring the functionality of the acoustic liners.

According to a preferred embodiment, the cruise position may correspond with an angle enclosed between the engine axis and a horizontal reference axis, which may represent ground, in the range of -10 degree to 50 degree. Alternatively or additionally, the hover position may correspond with an angle enclosed between the engine axis and the horizontal reference axis in the range of 50 degree to 115 degree.

A further aspect of the invention relates to a drainage system for an acoustic liner of a propulsion unit of an aircraft for vertical take-off and landing. The drainage system comprises a network of interconnected fluid communication paths, which are formed by a plurality of drainage slots that cut through cell walls of adjoining cells of a core-structure of the acoustic liner, the cells having cell cavities. The plurality of drainage slots comprises at least a group of hover slots, each with a hover slot extension extending in a hover slot direction, and a group of cruise slots, each with a cruise slot extension extending in a cruise slot direction. The hover slot direction is different from the cruise slot direction. The drainage system further comprises at least one drainage opening, which is provided in a base-layer of the core-structure, and which is in fluid communication with at least one of the slotted cells to discharge fluid, which enters the acoustic liner through openings of a face-layer of the core-structure and guided in the drainage slots from the cell cavities to the drainage opening. Preferably, the drainage system may comprise a wastewater outlet for discharging the fluid. The drainage slots, the drainage opening and the wastewater outlet may be in fluid communication with each other.

Thereby, the same advantages and technical benefits can be derived as described above for the acoustic liner, for the propulsion unit and for the aircraft of the invention.

Further features, advantages and objects of the present invention will become apparent for the skilled person when reading the following detailed description of embodiments of the present invention and when taking in conjunction with the figures of the enclosed drawings. The figures show schematically:
- **Figure 1**: an embodiment of an acoustic liner and of a propulsion unit of the invention,
- **Figure 2**: a further embodiment of the acoustic liner of the invention,
- **Figure 3**: a detail view of a further embodiment of the acoustic liner of the invention,
- **Figure 4A**: a further embodiment of the acoustic liner according to the invention,
- **Figures 4B, 4C**: cell patterns of embodiments of the acoustic liner of the invention,
- **Figure 5**: a further embodiment of the acoustic liner according to the invention,
- **Figures 6A to 6C**: details of a further embodiment of the acoustic liner of the invention,
- **Figure 7**: further embodiment of the acoustic liner and propulsion unit of the invention,
- **Figure 8**: further embodiments of acoustic liner and propulsion unit of the invention,
- **Figure 9A**: an embodiment of the aircraft of the invention,
- **Figures 9B, 9C**: a further embodiment of the propulsion unit of the invention,
- **Figures 10**: visualisations of the efficiency of the propulsion unit of the invention in draining water ingress.

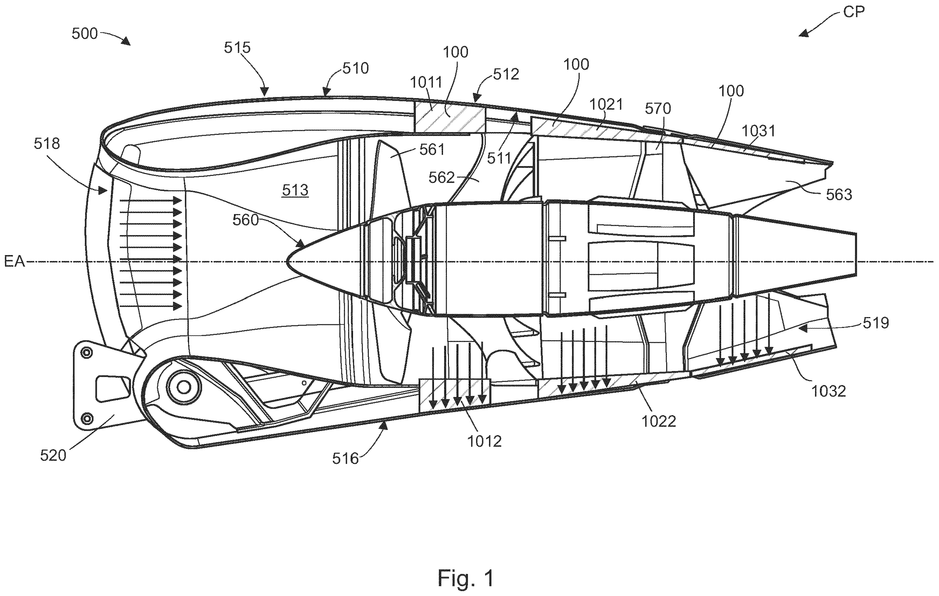

Figures 1 to 10 show different aspects and embodiments of the present invention.

A first aspect of the invention relates to an acoustic liner 100 for a propulsion unit of a vertical take-off and landing aircraft. Figures 1 to 8 show the acoustic liner 100 exemplarily.

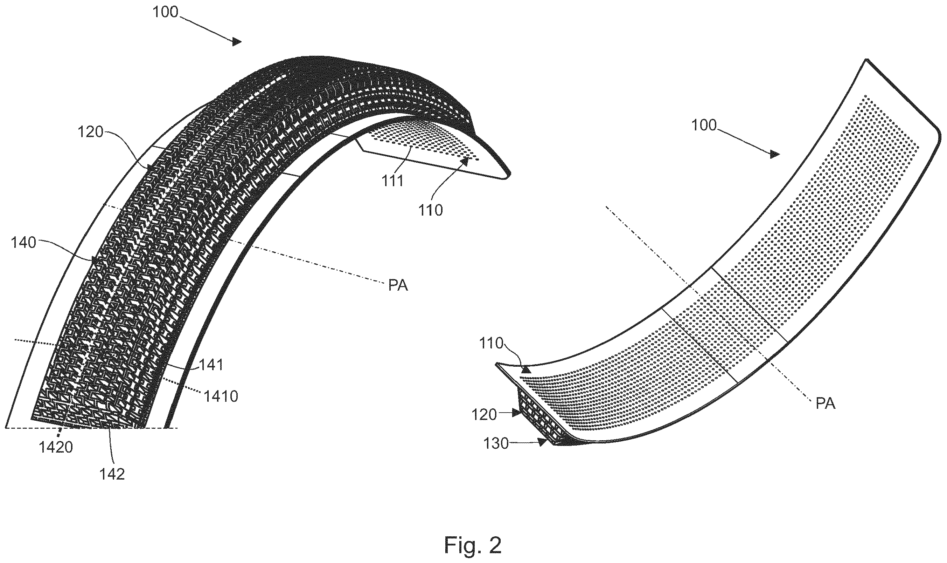

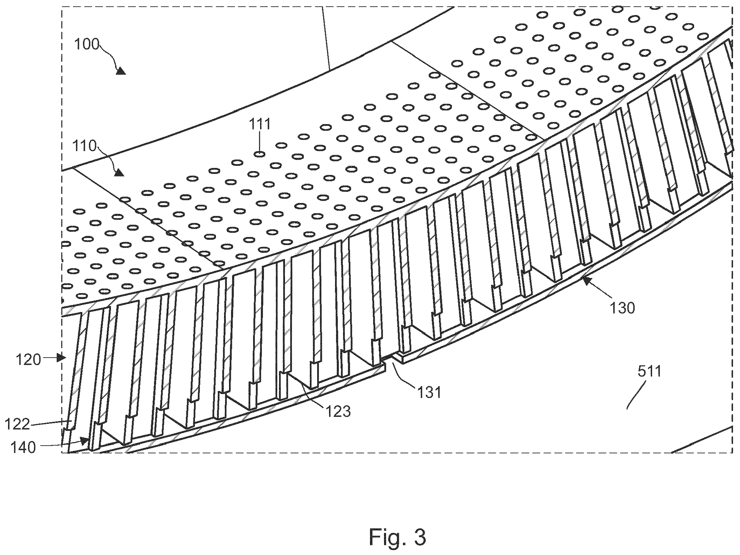

The acoustic liner 100 is configured to cover a surface of the propulsion unit to attenuate noise that is generated inside the propulsion unit. Figures 1, 3, 7 and 8 exemplarily show a plurality of the acoustic liners 100 covering an interior surface 511 of a propulsion unit 500. For this, the acoustic liner 100 may be provided as a curved panel, thereby following the inside contour of the nacelle of the propulsion unit 500. Figures 2 and 3 show this exemplarily. The acoustic liner 100 may be convexly curved about a panel axis PA and it may have a ring-shaped structure. The acoustic liner 100 may be made of flame-resistant materials.

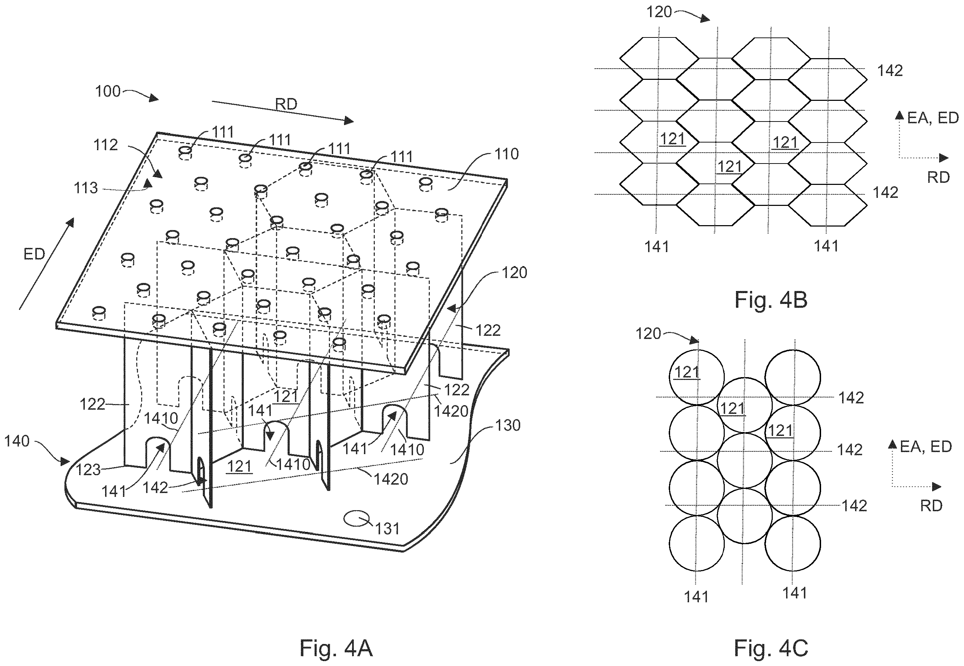

As can be taken from the exemplary illustrations of Figures 2 to 6 and best from Figure 4, the acoustic liner 100 has a sandwich structure that is comprised by a core-structure 120 being covered on opposite sides by a face-layer 110 and a base-layer 130.

The face-layer 110 comprises a plurality of openings 111, through which acoustic sound waves can travel unhindered into the core-structure 120. For instance, the face-layer 110 may be made by carbon fibre-reinforced plastic, preferably being plate-shaped, and may be provided with through holes as the openings 111 at regular intervals. The face-layer 110 comprises an outer surface 112, which may face inside the propulsion unit 500, and an inner surface 113, where the face-layer 110 is coupled to the core-structure 120.

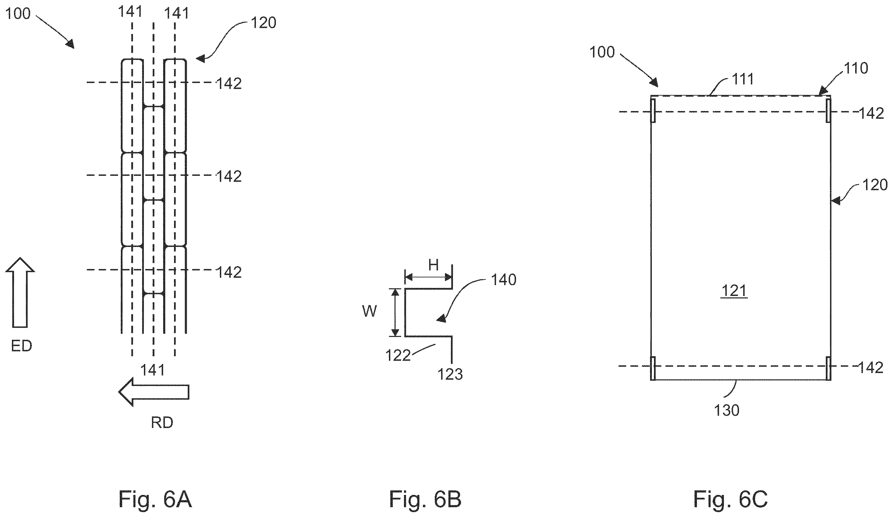

As illustrated in Figures 4A to 4C, the core-structure 120 comprises a plurality of cells 121 that are defined by cell walls 122. Each cell 121 may extend in an axial direction with the cell walls 122, which extend circumferentially to surround cell cavities. The cells 121 may be open on both opposite axial ends. One of the axial ends is covered by the face-layer 110 and the opposite end is covered by the base-layer 130. The openings 111 and the cell cavities are positioned relatively to each other such that they are in fluid communication for the cells 121 to define acoustic resonators. The core-structure 120 may be a honeycomb structure that may extend with a ribbon direction RD and a transverse expansion direction ED. The core-structure 120 comprises cells 121 having various cross-sectional profiles, such as hexagonal (Figures 4A, 4B), circular (Figure 4C) or rectangular (Figures 2, 6A).

The core-structure 120 comprises a plurality of drainage slots 140 that cut through the cell walls 122 of adjoining cells 121, forming a network of interconnected fluid communication paths between the respectively slotted cells 121. This can be taken best from Figures 2 to 6. For instance, the drainage slots 140 may be provided as plurality of apertures in the cell walls 122, which facilitate for trapped liquid to move between cells 121. Thereby, the trapped liquid can be transported out of the acoustic liner 100. As exemplarily shown in the Figures, the individual drainage slot 140 may be defined by a series of apertures that are aligned with each other along a slot centre line. The slot centre line may be a straight line (as shown in Figures), but also multidimensionally curved centre lines are conceivable.

The plurality of drainage slots 140 may be arranged and configured such that they can be distinguished as belonging to different groups of slots. The drainage slots 140 of the same group may extend parallel or substantially parallel with each other along their respective slot centrelines. In the Figures, exemplarily only two groups of slots are illustrated. However, it is conceivable that more than the displayed two groups of drainage slots 140 are provided. Specifically, the core-structure 120 comprises a group of hover slots 141 that extend with a hover slot extension in a hover slot direction 1410. In addition, the core-structure 120 comprises a group of cruise slots 142 that extend with a cruise slot extension in a cruise slot direction 1420. As can be taken from the Figures, the hover slot direction 1410 is provided to be different to the cruise slot direction 1420. In particular, the two directions may be perpendicular to each other. The drainage slots 140 may be provided such that each of the cells 121 is cut only once by a slot 141, 142 of each of the groups. This is exemplarily illustrated in Figures 4 and 6, where the cruise slots 142 are provided at regular intervals and with an offset from the geometric centre of each of the cells 121. Compared to the hover slots 141, the intervals of the cruise slots 142 may be wider. The hover slots 141 may be provided to cut through the centre of the cells 121. Preferably, the cruise slot direction 1420 may be parallel to the ribbon direction RD, and the hover slot direction 1410 may be parallel to the expansion direction ED (Figures 4B, 4C and 6A). Such configuration facilitates to reduce the impact that the drainage slots 140 have on the noise-dampening properties of the acoustic liner 100.

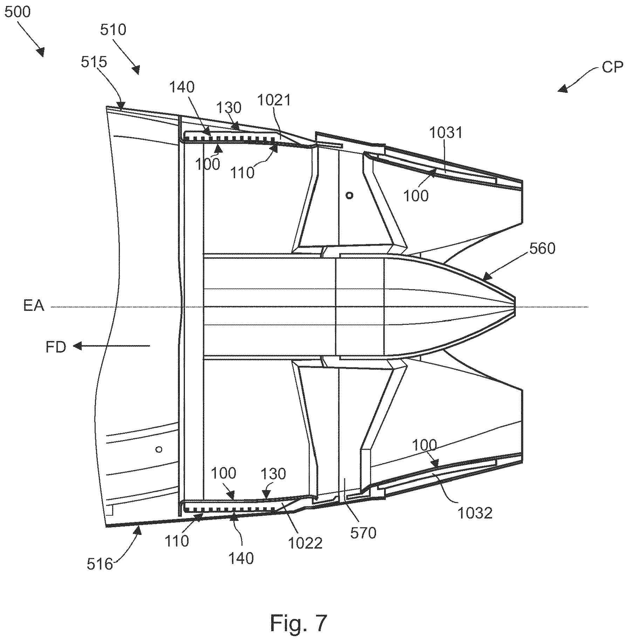

The drainage slots 140 may preferably extend from a circumferential edge 123 of the cell walls 122. This can be taken best from exemplary illustrations of Figures 3 to 8. However, it is also conceivable that the drainage slots 140 extend within the cell walls 122. At least some of the drainage slots 140 may be provided proximate to the base-layer 130. It is also conceivable that the drainage slots 140 are alternatively or additionally provided proximate to the face-layer 110 (cf. Figures 6C and 7). As exemplarily illustrated in Figures 1, 7 and 8B, this configuration allows to provide the acoustic liner 100 selectively as a top liner (e.g. acoustic liners 1011, 1021, 1031) for an operational upper position of the propulsion unit 500 or as a bottom liner (e.g. acoustic liners 1012, 1022, 1032) for a operational lower position of the propulsion unit 500. These operational positions may be found, for example, during normal flight (cruise) mode. For instance, if it is intended to use gravity to draw trapped liquid out of the acoustic liner 100, the configuration of a top liner requires the liquid to distribute in proximity to the face-layer 110 rather than at the base-layer 130. The base-layer 130 configuration may thus, more apt for a bottom liner.

The drainage slots 140 may have any cross-sectional profile. For instance, as exemplarily illustrated in Figures 3 and 6B, the drainage slots 140 may have a rectangular or quadratic cross-section, comprising a slot width W and a slot height H. Preferably, the slot width W and slot height H may be in the range between 1 mm and 8 mm, respectively. Alternatively, as shown in Figure 4A, the cross-sectional profile may comprise a half-circle.

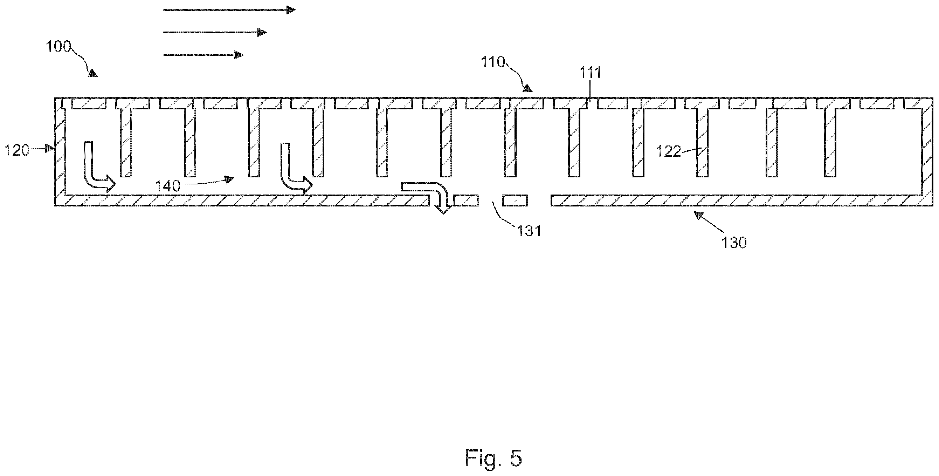

Trapped liquid can be ejected from the acoustic liner 100 by releasing the liquid through a drainage opening 131, which provides a fluid path to the liner exterior. For this, the drainage opening 131 is in fluid communication with at least one of the drainage slots 140. The drainage opening 131 is exemplarily illustrated in Figures 3 to 5, 8 and 9. At least one of the base-layer 130 and the face-layer 110 comprises the drainage opening 131. In the Figures, the drainage opening 131 is exemplarily shown as being provided in the base-layer 130. The drainage opening 131 may be provided as slits (Figure 5) or as circular or rectangular cutouts (Figures 3 and 4A). The drainage opening 131 may be arranged at or near the centre of the acoustic liner 100, for example.

The invention also relates to a propulsion unit, such as the above-mentioned propulsion unit 500. The propulsion unit 500 is configured for providing a propelling force for an aircraft 600 for vertical take-off and landing, which also forms part of the invention. In particular, a flight direction of the aircraft 600 may be set by the propulsion unit 500.

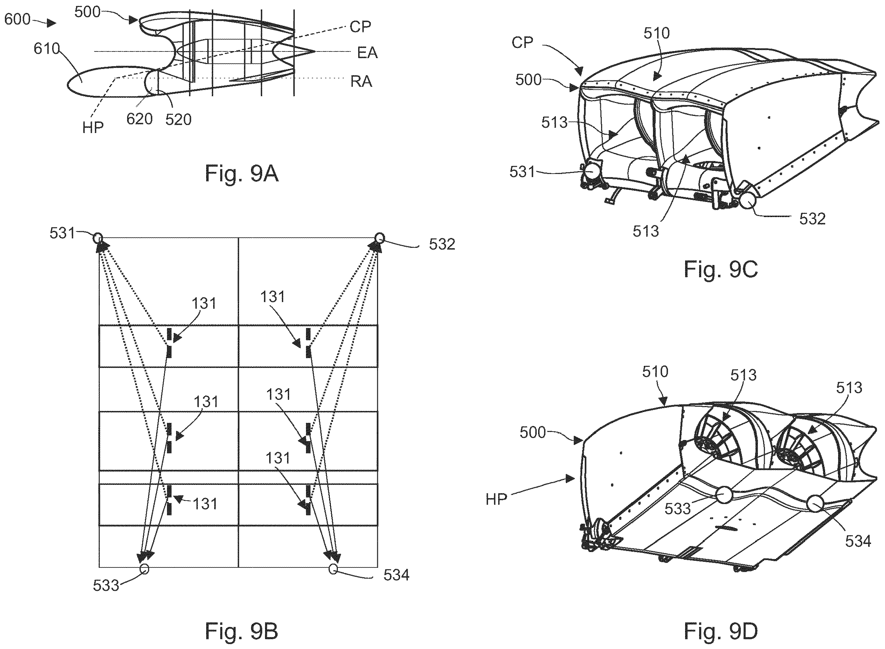

The propulsion unit 500 is operable between a hover position HP and a cruise position CP. For this, the propulsion unit 500 is mounted via a mounting interface 520 on a wing 610 of the aircraft 600 so that the propulsion unit 500 is relatively moveable between at least said two positions HP, CP with respect to the wing 610. Therein, the wing 610 may be anyone of front nose wings and back tail wings of the aircraft 600. The wing 610 comprises a corresponding counter-mounting interface 620 to facilitate, for instance, pivoting of the propulsion unit 500. This is exemplarily illustrated in Figures 1 and 9.

The hover position HP and the cruise position CP may be defined by an angle enclosed by an engine axis EA of the propulsion unit 500 and a reference axis RA that is defined by the wing 610. For instance, the cruise position CP may correspond with an accordingly enclosed angle between -10 to +50 angular degrees. This position is exemplarily illustrated in Figures 1 and 9C. In this position, the propulsion unit 500 may have an operational upper side 515 and an operational lower side 516. The hover position HP may correspond with an accordingly enclosed angle between +50 to +115 angular degrees.

The propulsion unit 500 comprises a propulsion unit housing 510, like a nacelle as illustrated in Figure 1. The propulsion unit housing 510 comprises an engine duct 513 with an engine 560 having an engine axis, like the aforementioned engine axis EA. The engine axis EA may determine the flight direction FD. The engine duct 513 has an intake opening 518 and an exit opening 519 that are connected by interior surface 511. The propulsion unit housing 510 also comprises an exterior surface 512. Thus, the propulsion unit housing 510 may be formed by a substantially ring-shaped nacelle with the exterior surface 512 forming an outer ring and the interior surface 511 forming the inner ring. Thus, the propulsion unit housing 510 may separate the propulsion unit interior from the propulsion unit exterior. The engine 560 may be coupled to the propulsion unit housing 510 and the interior surface 511 by engine stands 570. The engine 560 may comprise a rotor with fan blades 561 at an upstream end. Downstream thereof, a stator 562 may be provided. Further downstream, the engine 560 may comprise a variable area nozzle 563. The propulsion unit 500 may comprise more than one engine duct 513, as shown in Figures 9C and 9D.

Figure 1 indicates exemplarily how air is sucked in by operation of the fan blades 561 and distributed through the engine duct 513. In particular, air paths from the intake opening 518 to the acoustic liners 100 that are connected to the interior surface 511 are shown. Fluid from rain or contained in the air can enter the acoustic liner 100 through the openings 111, which, due to the provision of the drainage slots 140, can be ejected through the drainage opening 131 (cf. Figure 5). Figure 3 shows how the fluid can be released through the drainage opening 131 onto the interior surface 511.

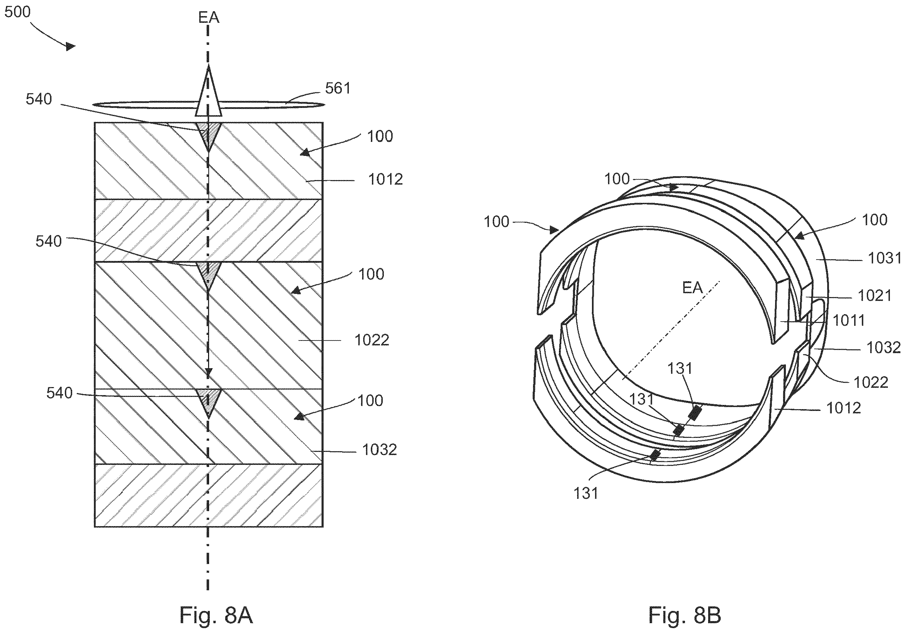

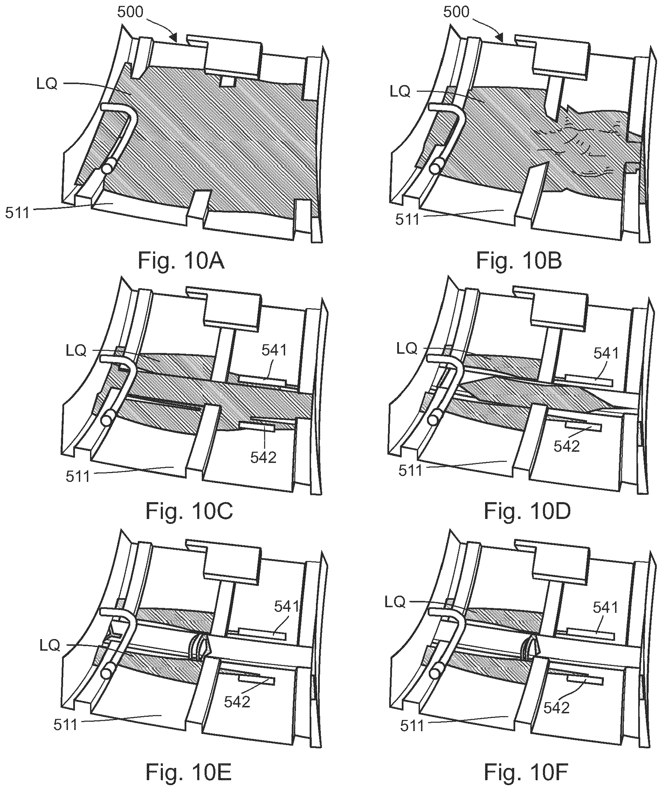

To remove the fluid out of the propulsion unit 500 or, more specifically, out of the propulsion unit housing 510, at least one wastewater outlet 531-534 is provided that is in fluid communication with the drainage opening 131. This is exemplarily illustrated in Figure 9B through arrows extending between various wastewater outlets 531, 532, 533, 534 and various drainage openings 131. The wastewater outlets 531-534 may be provided on various locations of the propulsion unit housing 510. Fluid channels integrally provided in the interior surface 511, pipes or hoses may be used to convey the fluid to the wastewater outlets 531-534. Alternatively or additionally, Figures 10C to 10F show the provision of two through cuts 541, 542 extending from the interior surface 511 to exterior surface 512 to release liquid LQ from the acoustic liner 100. The through cuts 541, 542 may be arranged below two correspondingly designed drainage openings 131 and thus, allow to expel the liquid LQ directly from the propulsion unit housing 510 through the through cuts 541, 542 as the wastewater outlets 531-534. Alternatively or additionally, as can be taken best from Figures 7 and 8, a connection opening 540 may be provided that provides a through passage for fluid to pass from the drainage opening(s) 131 into a cavity between the interior and exterior surface 511, 512 of the propulsion unit housing 510. From there, the fluid can be directed to one or more of the wastewater outlets 531-534. The propulsion unit 500 may comprise different wastewater outlets 531-534 to correspond with different positions of the propulsion unit 500. This is illustrated exemplarily in Figures 9B to 9D. Therein, at a portion of the propulsion unit housing 510 near the intake opening 518, two wastewater outlets 531, 532 for ejecting fluid in the cruise position CP may be provided. For the hover position HP, two wastewater outlets 533, 534 may be provided near the exit opening 519 of the propulsion unit housing 510, preferably along a centre line of the engine duct 513.

Different sections of the engine duct 513 may be provided each with the acoustic liner 100. The acoustic liners 100 may have an identical or respectively different configurations. In Figures 1 and 7 to 9, at least three different sections are exemplarily shown that each comprise a top liner 1011, 1021, 1031 and a bottom liner 1012, 1022, 1032, which are arranged opposite to each other with respect to the engine axis EA. A top liner may differ from a bottom liner in the position of at least the cruise slots 142, which may be provided closer to the face-layer 110 or at the inner surface 113 for a top liner. In comparison, for a bottom liner, the cruise slots 142 may be provided closer to the base-layer 130. The choice between bottom liner and top liner may be made with regards to the orientation of the propulsion unit housing 510 in the cruise position CP. Preferably, the sections for receiving the acoustic liner 100 may be sections of the interior surface 511 at locations downstream of the fan blades 561, the stator 562, and/or at or near the variable area nozzle 563.

The acoustic liners 100 may be connected to the interior surface 511 by fixing elements or by adherence, such as adhesive strip. Further, it is conceivable to arrange the acoustic liner 100 inside the engine duct 513 such that the slot extension of at least one of the groups of drainage slots 140 extends in parallel to the engine axis EA and the respective other of the groups extends with their respective slot extension obliquely to the engine axis EA. This is exemplarily illustrated in Figures 4B and 4C for the hover slots 141 having a hover slot direction 1410 parallel to the engine axis EA, and the cruise slots 142 having a cruise slot direction 1420 directed orthogonal to the engine axis EA.

A further aspect of the invention relates to a method of draining fluid from the above-described propulsion unit 500. Therein, the propulsion unit 500 is moved selectively or successively to a preferably predetermined cruise position CP and to a preferably predetermined hover position HP. This can be done, for example, before starting a flight or it can be part of a take-off and landing routine. The predetermined positions may be chosen in correspondence with the position of the drainage openings 131, and/or the wastewater openings 531-534, and/or the configuration and arrangement of the acoustic liner 100 on the interior surface 511. Figures 10 illustrate exemplarily the progression of draining the accumulated liquid LQ with this method.

The invention is not limited by the embodiments as described hereinabove, as long as being covered by the appended claims. All the features of the embodiments described hereinabove can be combined in any possible way and be provided interchangeably.

### Reference signs

- 100: acoustic liner
- 110: face-layer
- 111: opening
- 112: outer surface
- 113: inner surface
- 120: core-structure
- 121: cell
- 122: cell wall(s)
- 123: circumferential edge
- 130: base-layer
- 131: drainage opening
- 140: drainage slots
- 141: hover slots
- 142: cruise slots
- 1410: hover slot direction
- 1420: cruise slot direction

- 500: propulsion unit
- 510: propulsion unit housing
- 511: interior surface
- 512: exterior surface
- 513: engine duct
- 515: operational upper side
- 516: operational lower side
- 518: intake opening
- 519: exit opening
- 520: mounting interface
- 531-534: wastewater outlet
- 540: connection opening
- 541, 542: through cuts
- 560: engine
- 561: fan blades
- 562: stator
- 563: variable area nozzle
- 570: engine stands

- 600: aircraft
- 610: wing
- 620: counter-mounting interface

- 1011: top liner
- 1021: top liner
- 1031: top liner
- 1012: bottom liner
- 1022: bottom liner
- 1032: bottom liner

- CP: cruise position
- HP: hover position

- ED: expansion direction
- RD: ribbon direction

- H: slot height
- W: slot width

- PA: panel axis
- EA: engine axis
- FD: flight direction
- RA: reference axis
- LQ: liquid

## Claims

1. An acoustic liner (100) for a surface (511, 512) of a propulsion unit (500) of a vertical take-off and landing aircraft (600), the propulsion unit (500) being operable between a hover position (HP) and a cruise position (CP), comprising:
- a face-layer (110) comprising openings (111) for receiving acoustic sound waves, the openings (111) extending from an outer surface (112) to an inner surface (113) of the face-layer (110);
- a core-structure (120), which is coupled to the inner surface (113) of the face-layer (110) and comprises cells (121) with cell walls (122) surrounding cell cavities that are in fluid communication with the openings (111) and define acoustic resonators; and
- a base-layer (130) covering the core-structure (120) on a side opposite to the face-layer (110);
wherein the core-structure (120) comprises a plurality of drainage slots (140, 141, 142) that cut through the cell walls (122) of adjoining cells (121) for forming a network of interconnected fluid communication paths between the respectively slotted cells (121),
**characterized in that**
the plurality of drainage slots (140, 141, 142) comprises at least
∘ a group of hover slots (141), each with a hover slot extension extending in a hover slot direction (1410), and
∘ a group of cruise slots (142), each with a cruise slot extension extending in a cruise slot direction (1420),
wherein the hover slot direction (1410) is different to the cruise slot direction (1420), and
the base-layer (130) and/or the face-layer (110) comprises at least one drainage opening (131) that is in fluid communication with at least one of the slotted cells (121) for draining fluid entering the cell cavities via the openings (111) through the drainage slots (140, 141, 142).

2. The acoustic liner (100) according to claim 1, wherein the hover slot direction (1410) is at an angle to the cruise slot direction (1420), preferably at an angle of at least 20°, 30°, 40°, 50°, 60°, 70°, 80° or 90°, or wherein the hover slot direction (1410) is perpendicular or at least substantially perpendicular to the cruise slot direction (1420).

3. The acoustic liner (100) according to claim 1 or claim 2, wherein the cell walls (122) of at least one of the cells (121) are cut by at least one of the hover slots (141) and at least one of the cruise slots (142).

4. The acoustic liner (100) according to any one of the preceding claims, wherein the drainage slots (140, 141, 142) are provided as a plurality of apertures in the cell walls (122), the apertures being aligned with each other preferably along a respective slot centreline (1410, 1420) to define the respective drainage slot (140, 141, 142), wherein more preferred the drainage slots (140, 141, 142) of the same group extend parallel or substantially parallel with each other along their respective slot centrelines (1410, 1420), and
wherein preferably the apertures comprise a polygonal, semi-circular or circular cross-sectional profile, preferably a rectangular or square cross-sectional profile.

5. The acoustic liner (100) according to any one of the preceding claims, wherein the cells (121) are arranged in the core-structure (120) in a honeycomb pattern, which extends with a ribbon direction (RD) and an expansion direction (ED), which is transverse to the ribbon direction (RD), and
wherein preferably the cruise slot direction (1420) is parallel to the ribbon direction (RD) and the hover slot direction (1410) is parallel to the expansion direction (ED).

6. The acoustic liner (100) according to any one of the preceding claims, wherein the cruise slots (142) are provided at predetermined and/or regular intervals in the hover slot direction (1410), preferably in the expansion direction (ED), and wherein preferably the intervals are configured such that each cell (121) is traversed by only one of the cruise slots (142).

7. The acoustic liner (100) according to any one of the preceding claims, wherein at least one, some or all of the drainage slots (140, 141, 142) may extend at the cell walls (122) from a circumferential edge (123) of the respective cell walls (122) towards the opposite side thereof, and/or
wherein at least some of the drainage slots (140, 141, 142), preferably the apertures, are provided at a section of the core-structure (120) adjacent to the face-layer (110) and/or the base-layer (130), wherein preferably the hover slots (141) are provided at a section of the core-structure (120) adjacent to the face-layer (110) and the cruise slots (142) are provided at a section of the core-structure (120) adjacent to the face-layer (110) or the base-layer (130).

8. The acoustic liner (100) according to any one of the preceding claims, wherein the acoustic liner (100) extends as a curved panel that curves about a panel axis (PA), wherein one of the groups of drainage slots (140, 141, 142), preferably the group of hover slots (141), extends with their respective slot extension in a slot direction (1410. 1420) parallel to the panel axis (PA), and wherein the respective other of the groups of drainage slots (140, 141, 142), preferably the cruise slots (142), extends with their respective slot extension in a slot direction (1410, 1420) of the circumference of the acoustic liner (100), and/or
wherein the acoustic liner (100) has a half-ring-shaped or ring-shaped cross-sectional profile.

9. The acoustic liner (100) according to any one of the preceding claims, wherein the at least one drainage opening (131)
- is provided at a section of the base-layer (130) located at a middle section of the acoustic liner (100),
- is provided at a section of the base-layer (130) located proximate to a lateral edge of the acoustic liner (100),
- is provided as a through-hole or a slot in the base-layer (130),
- has a cross-sectional profile that is identical or substantially identical the cross-sectional profile of one of the cell cavities, circular, square or rectangular, and/or
- has a length in the range of 1 mm to 10 mm, preferably 3 mm, and a width in the range of 1 mm to 10 mm, preferably 2 mm.

10. A propulsion unit (500) of a vertical take-off and landing aircraft (600), the propulsion unit (500) being operable between a hover position (HP) and a cruise position (CP), comprising:
- a propulsion unit housing (510) comprising
∘ an engine (560) having an engine axis (EA), and
∘ an engine duct (513), which extends with an interior surface (511) inside the engine duct (513) between an intake opening (518) and an exit opening (519),
- a mounting interface (520) for mounting the propulsion unit (500) on a wing (610) of the aircraft (600) so that the propulsion unit (500) is relatively moveable between at least one hover position (HP) and at least one cruise position (CP),
**characterized by**
- at least one acoustic liner (100) according to any one of the preceding claims 1 to 9, wherein the acoustic liner (100) is connected to the interior surface (511), and
- at least one wastewater outlet (531, 532, 533, 534) for removing fluid, which enters the engine duct (513) via the intake opening (518), from the acoustic liner (100), wherein the at least one wastewater outlet (531, 532, 534, 535) is in fluid communication with the at least one drainage opening (131) of the acoustic liner (100).

11. The propulsion unit (500) according to claim 10, wherein the acoustic liner (100) is arranged on the interior surface (511) such that at least one of the groups of drainage slots (140, 141, 142), preferably the group of hover slots (141), extends with their respective slot extension in a slot direction (1410, 1420) parallel to the engine axis (EA), and preferably such that the respective other of the groups of drainage slots (140, 141, 142), preferably the cruise slots (142), extends with their respective slot extension in a slot direction (1420) obliquely to the engine axis (EA), and/or
wherein the acoustic liner (100) extends at least partially with a contour of the interior surface (511).

12. The propulsion unit (500) according to preceding claim 10 or claim 11, comprising a plurality of acoustic liners (100) for covering at least part of the interior surface (511), and
wherein preferably the plurality of the acoustic liners (100) is provided at different sections of the interior surface (511) along the engine axis (EA) and wherein the acoustic liners (100) are provided at opposite sides of the interior surface (511) with respect to the engine axis (EA).

13. The propulsion unit (500) according to any one of the preceding claims 10 to 12, comprising at least two of the wastewater outlets, which comprise
- a hover outlet (533, 534) for draining fluid in the hover position (HP), wherein the hover outlet (533, 534) is provided at a first outlet section of the interior surface (511) and extends between the interior surface (511) of the engine duct (513) and an exterior surface (512) of the propulsion unit housing (510) along a hover outlet extension direction obliquely to the engine axis (EA) to fluidly connect the propulsion unit interior with the propulsion unit exterior, wherein preferably the first outlet section is arranged proximate to the exit opening (519), and
- a cruise outlet (531, 532) for draining fluid in the cruise position (CP), wherein the cruise outlet (531, 532) is provided at a second outlet section of the interior surface (511) and extends between the interior surface (511) of the engine duct (513) and an exterior surface (512) of the propulsion unit housing (510) along a cruise outlet extension direction obliquely to the engine axis (EA) to fluidly connect the propulsion unit interior with the propulsion unit exterior, wherein preferably the second outlet section is proximate to the intake opening (518) and/or laterally offset from the engine axis (EA), and
wherein preferably the hover outlet extension direction extends obliquely or perpendicularly to the cruise outlet extension direction.

14. An aircraft (600) for vertical take-off and landing comprising at least two wings (610), preferably comprising two front nose wings and two back tail wings, each of the wings (610) comprising
- a wing section to generate a lifting force during a cruising movement of the aircraft (600),
**characterized by**
- at least one counter-mounting interface (620), onto which at least one propulsion unit (500) according to any one of the preceding claims 10 to 13 is mounted via the mounting interface (520).

15. A method of draining fluid from a propulsion unit (500) of any one of claims 10 to 13, the propulsion unit (500) being mounted to be moveable with respect to a wing of an aircraft (600), or a method of draining fluid from a propulsion unit (500) of an aircraft (600) of claim 14, the method comprising:
- moving the propulsion unit (500) to a cruise position (CP), and/or
- moving the propulsion unit (500) to a hover position (HP).

16. The method of claim 15, wherein the cruise position (CP) corresponds with an angle enclosed between the engine axis (EA) and a horizontal reference axis (RA) in the range of -10 degree to 50 degree, and wherein the hover position (HP) corresponds with an angle enclosed between the engine axis (EA) and the horizontal reference axis (RA) in the range of 50 degree to 115 degree.
